**Europäisches Patentamt**

**European Patent Office**

**Office européen des brevets**

(19)

(11) Veröffentlichungsnummer: **0 122 428**
**A2**

(12) # EUROPÄISCHE PATENTANMELDUNG

(21) Anmeldenummer: **84102417.7**

(22) Anmeldetag: **07.03.84**

(51) Int. Cl.³: **F 03 B 17/06**

(30) Priorität: **12.03.83 DE 3308815**

(43) Veröffentlichungstag der Anmeldung:
**24.10.84 Patentblatt 84/43**

(84) Benannte Vertragsstaaten:
**AT BE CH DE FR GB IT LI NL SE**

(71) Anmelder: **Klute, Ferdinand**
**Fixberg 6**
**D-4790 Paderborn(DE)**

(72) Erfinder: **Klute, Ferdinand**
**Fixberg 6**
**D-4790 Paderborn(DE)**

(74) Vertreter: **Hoefer, Theodor, Dipl.-Ing.**
**Kreuzstrasse 32**
**D-4800 Bielefeld 1(DE)**

(54) **Druckflächen-Transmissions-Kraftanlage.**

(57) Bei einer Druckflächen-Transmissions-Kraftanlage zur Nutzbarmachung der natürlichen Strömungsgefälle von Wasserund Windmengen sind mehrere gleichartige, parallel angeordnete, nach oben offene Kanäle (10) mit jeweils rechteckigem Querschnitt vorgesehen, wobei in jedem Kanal (10) zwei mit einer Hauptwelle (11) verbundene, als Antriebe wirkende rechteckige, in Querschnittsebenen des Kanals (10) sich erstreckende Druckplatten (18) in Strömungsrichtung geradlinig verschiebbar angeordnet sind. Eine solche Anlage ermöglicht es, die Bewegungsenergie von flachen Strömungen zur Energiegewinnung zu nutzen, wobei in jedem Kanal eine im unteren Teil des Querschnitts von der Flüssigkeitsströmung verschobene Druckplatte (18) die Hauptwelle (11) antreibt, während die andere Druckplatte sich im oberen Teil des Querschnitts des Kanals (10) in ihre Ausgangsstellung zurückbewegt, um dann in den unteren Teil und in die Strömung einzutauchen.

EP 0 122 428 A2

./...

Fig. 1

Herr Ferdinand Klute, Fixberg 6, 4790 Paderborn

Druckflächen-Transmissions-Kraftanlage

Die Erfindung betrifft eine Druckflächen-Transmissions-Kraftanlage zur Nutzbarmachung der natürlichen Strömungsgefälle von Wasser- und Windmengen.

Eine solche Anlage dient der Nutzbarmachung des in der Natur vorhandenen Strömungsgefälles bei Flur-Gezeiten, vorhandenen Stauseen und Winden.

Wasser- und Windkraftanlagen sind in verschiedenen Ausführungen, z.B. als Turbinen oder als Wasser- oder Windmühlen bekannt. Hierbei hat sich in der Praxis gezeigt,
daß die Ausbeute der gemessenen gewonnenen Energie gering
war in Bezug auf die enormen Wasser- und Windmengen, die
eingesetzt wurden. Der Grund ist darin zu sehen, daß die
Strömungsrichtung der Antriebsmengen mit einem Winkel
von 30 bis 40° auf die Segmente des Rotors treffen. Dieser
Rotationsdruck verläuft dann leistungshemmend im rechten
Winkel zur Richtung der Strömungsmenge. Somit wird im
geschilderten Fall nur ein geringer Teil der Energie frei.

In der Praxis hat sich auch gezeigt, daß beim wirtschaftlichen Ein-satz von Turbinen ein Druckgefälle von 10m
und mehr erforderlich ist, was die Installation von langen
und großen Zubringer-Rohrleitungen bedingt. Die Verlegung
solcher Zubringer-Rohrleitungen ist besonders kostspielig
in gebirgigem Erdreich.

Der Erfindung liegt die Aufgabe zugrunde, eine Kraftanlage
zu schaffen, bei der die Druckflächen der Anlage und der
Strömungsmengen in die gleiche Richtung verlaufen, so
daß eine energiehemmende einzelne Richtungsänderung zum
Zwecke der Energiegewinnung nach bisheriger konventioneller Art vermieden wird.

Der Erfindung liegt weiterhin somit die Aufgabe zugrunde,
eine Kraftanlage zu schaffen, die es ermöglicht, auf große
Zubringer-Rohrleitungen und Höhenunterschiede zu verzichten.

Diese Aufgabe wird erfindungsgemäß bei einer Druckflächen-
Transmissions-Kraftanlage durch mehrere gleichartige, parallel angeordnete Kanäle mit jeweils rechteckigem Querschnitt gelöst, wobei in jedem Kanal zwei mit einer Hauptwelle verbundene, als Antriebe wirkende rechteckige, in Querschnittsebenen des Kanals sich erstreckende Druckplatten in Strömungsrichtung geradlinig verschiebbar angeordnet sind.

Die parallel nebeneinanderliegenden offenen Kanäle, durch die die Strömungsmengen geleitet werden, nehmen gleichzeitig alle beweglichen und unbeweglichen Teile der Kraftanlage auf. In den oben offenen Kanälen bieten die Druckplatten stark strukturierte Flächen, die in sich eben und rechteckig sind und von den Strömungsmengen in die gleiche Richtung gedrückt werden.

Bevorzugt ist jede Druckplatte über zwei seitlich abstehende obere waagerechte Zapfen mit an den beiden Seitenwänden des Kanals in Strömungsrichtung geführten endlosen oberen Gliederketten und über zwei seitlich abstehende, untere waagerechte Zapfen mit an den beiden Seitenwänden des Kanals unterhalb der oberen Gliederkette in Strömungsrichtung geführten endlosen unteren Gliederketten verbunden, wobei jede Gliederkette auf zwei an den Seitenwänden gelagerte Umlenkräder gespannt ist.

Die Gliederketten verlaufen in Ausnehmungen, die zur Kanalinnenseite hin verdeckt sind. Sie über-tragen die gewonnene Energie über Zahnräder an eine zentral gelagerte Hauptwelle. Diese nimmt die gewonnene Energie auf, steuert die Strömungsgeschwindigkeit, koordiniert alle beweglichen Teile der Anlage und überträgt die gewonnene Kraft an ein Aggregat, beispielsweise einen Generator für elektrischen Strom.

Vorzugsweise kann man solche Kraftanlagen hintereinander gestaffelt in oder neben Flüssen montieren. Das Druckgefälle der Gezeiten kann man durch solche Anlagen ebenfalls nutzen. Durch eine leichte Änderung in der Mechanik kann man auch das Druckgefälle von Winden in Energie umsetzen. Die volle Kraft des Druckgefälles der Strömungsmengen wird in allen Fällen in Energie umgesetzt, abzüglich geringer Energieverluste, die durch Reibung der Gliederketten oder Zahnräder verursacht werden.

In der vorderen bzw. hinteren Längshälfte des einzelnen Kanals ist je eine Druckplatte so angeordnet, daß sie am Anfang der Laufstrecke in die Strömung eintaucht, somit den Strömungsdruck derselben zurückweichend aufnimmt und dadurch Bewegungsenergie liefert. Anschließend hebt sie sich am Ende der Laufstrecke aus der Strömung heraus und wandert oberhalb derselben zur Ausgangsstellung zurück. Das Ein- bzw. Auftauchen der Druckplatten geschieht nach bestimmten betriebsbedingten Intervallen, damit eine fortdauernde sich selbst unterhaltende und ausgeglichene Rotation der Hauptwelle gewährleistet ist. Letztere ist Voraussetzung für eine gleichbleibende Energieabgabe seitens der Hauptwelle über ein Schaltgetriebe an ein Aggregat. Mit der Schaltung des Getriebes hat man die Möglichkeit, die Geschwindigkeiten der Strömungsmengen im Verbund mit den Druckplatten zu reduzieren, um den Wasserspiegel zu erhöhen, so daß ein Stau entsteht. Bei witterungsbedingtem Anfall großer Strömungsmengen wird man diese mit dem Schaltgetriebe beschleunigen, nachdem man die gewünschte Höhe des Wasserspiegels erreicht hat. Um die geschilderte Betriebsweise zu ermöglichen, benötigt man mehrere parallele nach oben offene Kanäle. Jeder Kanal hat zwei Längshälften und nimmt in der Mitte die Hauptwelle auf. Diese läuft gegenüber den Längsachsen der Kanäle rechtwinklig und mittig durch alle nebeneinanderliegenden Kanäle.

Jede Längshälfte eines Kanals hat an jeder Seite zwei Zahnräderpaare, die im unteren Teil der Kanalhälfte und zwei, die im oberen Teil oberhalb derselben angeordnet sind. Deren Achsen haben gegenüber dem Kanalboden gleiche Höhe und deren Abstand voneinander bestimmt die Umlaufstrecke. Diese Paare sind mit umlaufenden Gliederketten verbunden und mit den Zahnrädern in den Kanalwänden so verdeckt, daß nur zum Kanalinneren hin die Ausnehmung offen ist, die die Gliederkette aufnimmt. Auch diese wird durch eine eigene Blende strömungsseitig verdeckt. Die Druckplattenhöhe und die Zahnraddurchmesser sollten doppelt so groß sein wie die normale Tiefe der Strömungsmassen, um den Stau zu ermöglichen. Der Höhenunterschied zwischen der Höhe des Wasserspiegels vor der Druckplatte und hinter derselben entspricht dem Strömungsdruck.

Zwischen den zwei unteren und oberen waagerecht laufenden Paaren der Gliederketten in jeder Kanalhälfte in eine Druckplatte befestigt, deren vier Ecken mit je einer der vier umlaufenden Gliederketten einzeln verbunden ist und zwar mit den Gliedern, die in Ruhestellung der Anlage höhen- und längenbedingt in genau gleichen Positionen stehen. Mit dieser Einstellung wird erreicht, daß die Druckplatte horizontal wie vertikal genau rechtwinklig im Kanalboden bzw. in den beiden Kanalwänden steht, auch während des Betriebes. Durch diese Art der Befestigung der Druckplatte wird sich diese während des Betriebes am Anfang der Laufstrecke jeder Kanalhälfte in die Strömung absenken. Sie wird von der strömenden Flüssigkeit in Strömungsrichtung gedrückt und nimmt zurückweichend den Strömungsdruck auf. Dadurch wird Energie frei. Diese wird über Gliederketten an die Hauptwelle und über das Schaltgetriebe an das Aggregat weitergeleitet. Das Schaltgetriebe dient dazu, die Strömungsmengen zu stauen (kleiner Gang), um über ein größeres Strömungsgefälle einen größeren Strömungsdruck zu erreichen, oder aber beim Anfall großer Strömungsmengen diese beschleunigt abfließen zu lassen (großer Gang). Am Ende der Laufstrecke hebt sich die Druckplatte betriebsbedingt aus den Strömungsmengen heraus und wird oberhalb derselben zum Ausgangs- oder Einlaufpunkt zurückgeführt. Dieser Vorgang findet in allen Kanälen statt.

Während des Betriebes halten die Druckplatten in allen Kanälen die gesamten Strömungsmengen in jeder Zeit unter Kontrolle. Nur beim Wechsel der Druckplatten im jeweiligen Kanal fließen kleine Mengen der Strömung ungewollt ab. Will man jedoch einen bestimmten ungehinderten Freifluß erreichen, so muß man unterhalb aller Druckplatten in allen Kanälen einen Freiraum belassen. Ein seitlich angelegter, mit einem Schieber versehener Stichkanal würde ebenfalls eine bestimmte gewünschte Menge der strömenden Flüssigkeit kontrolliert ablaufen lassen.

Bisher wurde der Vorgang in einer Kanalhälfte beschrieben, neben den dazugehörigen Bauteilen, das ist jedoch nur ein Teil einer ganzen Anlage. Ein Kanal hat bekanntlich zwei Kanalhälften. Im vorderen bzw. hinteren Teil des Kanals befindet sich je eine Druckplatte. Die Bewegungen dieser Druckplatten befinden sich untereinander bei zeitlich abgestimmten Intervallen immer im Wechsel, d.h., wenn Druckplatte A eintaucht und sich von den Strömungs- mengen schieben läßt, hebt Druckplatte B sich aus der
Strömung heraus und bewegt sich oberhalb derselben in
die Ausgangsstellung zurück. Wenn die Druckplatte B eintaucht, hebt sich die Druckplatte A heraus und begibt
sich in die Ausgangsstellung zurück. Dieser Vorgang geschieht fortlaufend in allen Kanälen. Die Bewegungen der
einzelnen Druckplattepaare untereinander in allen Kanälen sind ebenfalls in bestimmten Intervallen zeitlich
abgestimmt, so daß im betrieblichen Zustand in allen Kanälen zu jeder Zeit die Hälfte aller Druckplatten eintauchen und von den Strömungsmengen geschoben werden,
während die andere Hälfte der Druckplatten sich aus den
Strömungsmengen herausheben und in die Ausgangsstellung,
d.h. zur Eintauchbasis, zurückkehren. Dadurch wird fortlaufend jeglicher freier und ungehinderter Fluß der Strömungsmengen vorwiegend unterbunden.

Die Hauptwelle ist in jedem Kanal über zwei Zahnräder
mit acht zur Hauptwelle weisenden Umlaufgliederketten
verbunden. Letztere übertragen die von den Druckplatten
erhaltene Energie auf die Hauptwelle, die z.B. in drei
Kanälen mit 24 Umlaufgliederketten beidseitig je zur Hälfte verbunden ist. Die Hauptwelle ist ein integrierender
Bestandteil der Gesamtanlage:

1. Sie gibt die von allen Druckplatten über Umlaufgliederketten erhaltene Energie über das Schaltgetriebe an das Aggregat weiter.

2. Sie koordiniert alle beweglichen Teile der Anlage und gleicht alle unterschiedlichen Drücke
   und Schübe aus.

3. Durch ihre zentrale Lagerung gewährleistet sie die gleichzeitige Führung aller mit ihre verbundenen Druckplatten im gleichen Rhythmus.

4. Sie verlagert die Energiewerte der jeweils eingestellten Schaltstufe des Getriebes auf alle beweglichen Teile der Anlage kontinuierlich und gleichmäßig.

Die Länge der zwei Druckplatten-Laufstrecken in jedem Kanal wird nur von der Materialfestigkeit der eingestellten Gliederketten begrenzt. Dabei wirkt sich die Lagerung der Kettenräder auf dem Boden der eingangs für Ketten freigelassenen Umlaufnischen besonders positiv aus, da das Eigengewicht der so gelagerten Ketten der Gesamtanlage im betrieblichen Zustand keinen Widerstand bietet. Die Gliederkette ist zur Nischenseite hin durch eine eigene Blende so verdeckt, daß von den Strömungsmengen mitgeführte Fremdkörper fester oder schlammiger Art nicht in die Nische eindringen können. Es können Kanalstrecken von 80 bis 120m und mehr Länge gebaut werden. Je größer die Länge eines Kanals ist, desto geringer sind die Intervalle des Hebens und Senkens aller Druckplatten. In bestimmten Abständen kann man die Strömungsmenge eines jeden Flusses in seiner ganzen Länge nutzbar machen, auch wenn dieser nur geringe Strömungsgeschwindigkeiten hat.

Bisher wurde beschrieben, wie durch den Strömungsdruck vor den Druckplatten Energie gewonnen wird. Darüber hinaus besteht die Möglichkeit, durch Verminderung des statischen Druckes hinter der Druckplatte, d.h. zur Ablaufseite hin, das Druckgefälle und somit auch den Strömungsdruck stark zu erhöhen.

Eine wichtige Voraussetzung hierfür sind die stetigen bestimmten Überfließmengen der strömenden Flüssigkeit, die während des Betriebes über die Oberkanten der eingebauten Druckplatten strömen. Hinter denselben bilden sich dann die durch die Strömung der Überfließmengen hervorgerufenen Lufträume. Diese haben einen statischen Druck und bewegen sich kontinuierlich mit den Strömungs-mengen, von denen sie auch abgeschirmt werden.Hier soll eine Vorrichtung beschrieben werden, die diesen statischen Druck vermindert und dadurch das Druckgefälle bzw. den Strömungsdruck erhöht.

Beiderseits der Druckplatten ist in ganzer Höhe derselben und gegenüber den Kanalseiten eine Durchflußöffnung bestimmter Größe belassen worden. Durch diese fließt ein Teil der Strömungsmengen, der in Verbindung mit den Leitblechen die Minderung des statischen Druckes hinter jeder getauchten Druckplatte bewirkt. Die Leitbleche sind an den hinteren Außenkanten der Druckplatten beidseitig in ganzer Höhe derselben befestigt.

Die Begrenzungskanten der Leitbleche haben zur Strömungsablaufseite den gleichen Verlauf wie die Mittellinie der Überfließmenge zum Kanalboden hin. Sie überlagern sich praktisch. Als Saugvorrichtung hat jedes Leitblech in der gesamten unteren Hälfte auf einem Viertel seiner Breite von der Druckplatte aus gesehen in seiner halben Höhe einen schmalen Längsschlitz. Dieser ist zur Strömungsseite hin auf seiner ganzen Länge mit einer Nase versehen. Die Nase wirft einen Teil der durch die Durchflußöffnung fließenden Strömungsmengen zur jeweiligen Kanalseite hin. Sodann führt die Hauptmenge der Durchflußmassen diesen von der Nase seitlich gedrückten Teil in Fließrichtung über den Schlitz und verursacht somit einen Sog. Dieser bewirkt die Reduzierung des statischen Druckes der durch die Überfließmengen abgeschirmten Lufträume und somit eine potentielle Erhöhung des Druckgefälles.

Das Resultat könnte, wenn nötig, verbessert werden,durch sogenannte Monoflow-Strahlrohre, die man im unteren Drittel der Lufträume an den Druckplatten anbringen müßte. Sie sollen weiter nicht erwähnt werden, da die Wirkungsweise bekannt ist.

Ein momentan schneller kräftiger Sog würde auch direkt nach den Eintauchen einer jeden Druckplatte möglich, wenn man vermittels einer Vakuumpumpe und Rückschlagventilen einen statischen Unterdruck erzielen würde. Die Saugleistung müßte in den Kanalwänden liegen und zum Kanalinneren hin zu den Stellen führen, die sich unmittelbar hinter den Eintauchstellen der Druckplatten befindet. Das Ein- bzw. Abschalten der Saugleitung müßte über Kontaktschalter erfolgen. Es soll auch hier nicht näher darauf eingegangen werden.

Bisher ist von flüssigen Strömungsmengen als Antriebskräften geschrieben worden. Auch Luftströmungsmengen können als solche dienen. Man kann die vorbeschriebene Anlage dazu verwenden und müßte sie nur mit einer Drehscheibe versehen, die eine zentral gelegene drehbare Achse hat, um welche im Kreis eine Schienenführung verlaufen würde, auf die sich die Kräfte der Windströmungsmaschine verla-gern, die durch die Anlage gleitet werden. Die Schienenführung nimmt auch alle anderen Kräfte der freien, z.T. turbulenten Windströmungen auf.

Die Drehscheibe dient auch zur Steuerung der Anlage in die jeweilige Windrichtung durch Windfahnen. Zum Betrieb der Anlage durch Wind müssen die Druckplatten durch Segmente ersetzt werden, die in einem Rahmen zusammengefaßt eine Druckplatte ergeben. Die Segmente wiederum müssen axial gelagert sein und durch ein alle Segmente verbindendes Universalgestänge auf mechanischen Druck hin geöffnet bzw. geschlossen werden können. Beim Senken in den Windkanal schließen sich die Segmente und formen eine geschlossene Druckfläche. Beim Heben drehen sich die axial gelagerten Segmente um 90° und bieten somit den Windmengen nur noch ganz wenig Widerstand auf dem Rückweg zum Ausgangspunkt.

Diese gestellte Aufgabe kann auch durch eine Kraftanlage gelöst werden, bei der Druckplatten nur an den oberen Enden mit Gliederketten verbunden sind, während ihre unteren Enden ohne Gliederketten nur in Führungsnuten der Kanalwände geführt sind.

Zur Erläuterung der Erfindung sind mit Bezugszahlen versehene Ausführungsbeispiele von mit flüssigen Strömungsmengen arbeitenden Anlagen in der Zeichnung dargestellt. Es zeigen:

Fig.1     eine perspektivische Ansicht dreier paralleler nach oben offener Kanäle mit einer gemeinsamen Hauptwelle, die von den eingebauten Druckplatten über Gliederketten angetrieben wird;

Fig.2     einen senkrechten Längsschnitt durch einen Kanal;

Fig.3     eine perspektivische Ansicht einer Druckplatte;

Fig.4     einen Schnitt gemäß Linie IV-IV der Fig.2 durch
          einen Kanal-Seitenbereich;

Fig.5     einen senkrechten Längsschnitt durch die von
          zwei Gliederketten geführte Druckplatte;

Fig.6     eine für die Anwendung von Windmengen abgewandelte Kanalanordnung;

Fig.7     eine perspektivische Ansicht einer abgeänderten,
          aus vier parallelen Kanälen bestehenden Einheit;

Fig.8     einen senkrechten Schnitt gemäß Linie VIII-
          VIII der Fig.7 durch einen dieser Kanäle;

Fig.9     eine perspektivische Ansicht einer Druckplatte
          mit den beiden Seitenblechen;

Fig.10    einen senkrechten Schnitt durch eine Saugvorrichtung einer Druckplatte;

Fig.11    eine am Ende eines dieser Kanäle angeordnete
          Blattfeder für die Druckplatte;

Fig.12    einen senkrechten Querschnitt durch zwei benachbarte Kanäle;

Fig.13    eine Draufsicht auf den Bereich der Hauptwelle
          zweier benachbarter Kanäle.

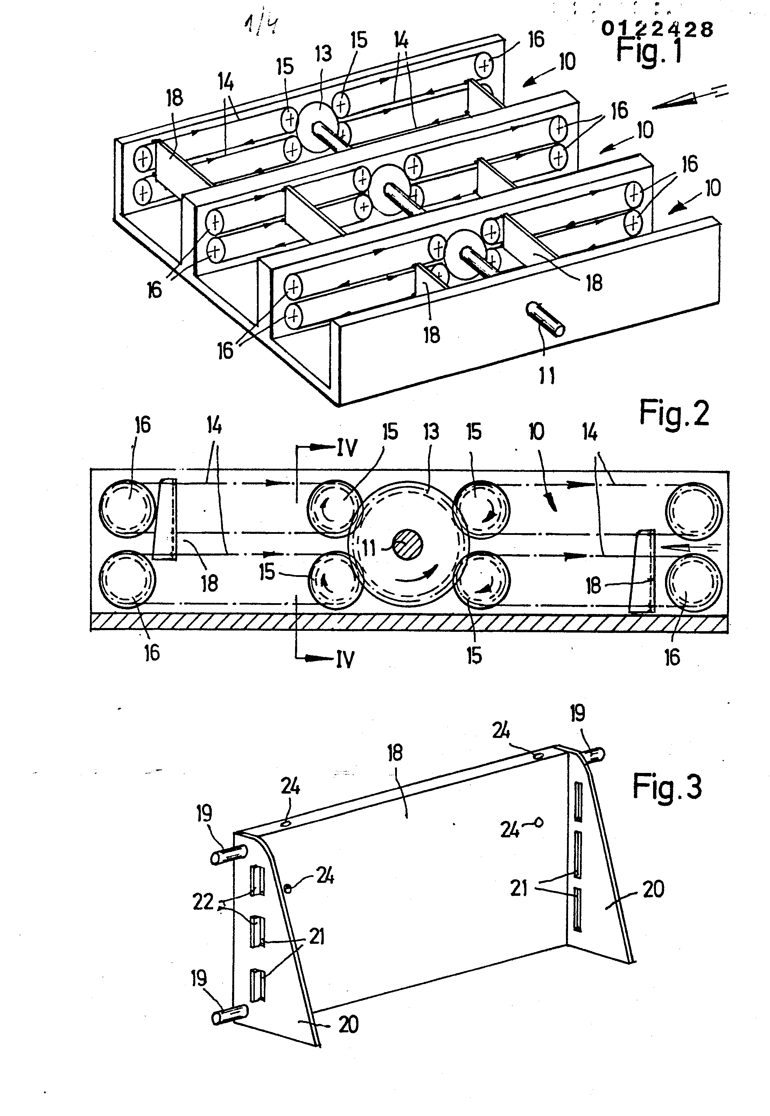

Die erfindungsgemäße Kraftanlage gemäß Fig.1 bis 6 besteht aus drei parallelen, oben offenen Kanälen 10 mit gleichen rechteckigen Querschnitten. In der Mitte aller Kanäle ist quer zur Strömungsrichtung eine gemeinsame Hauptwelle 11 gelagert. Jede Seitenwand eines Kanals 10 enthält an der Innenseite eine Ausnehmung 12, in der sich ein mit der Hauptwelle 11 fest verbundenes angetriebenes Zahnrad 13 befindet. In der Ausnehmung 12 sind auf jeder Kanalhälfte zwei endlose Gliederketten 14 übereinander angeordnet, wobei jede Gliederkette 14 auf ein mit dem angetriebenen Zahnrad 13 der Hauptwelle 11 im Eingriff befindliches treibendes Zahnrad 15 und auf ein am Ende des Kanals gelagertes Umlenkrad 16 gespannt ist. Am treibenden Zahnrad 15 ist zu diesem Zweck ein koaxialer Kettenzahnkranz 17 zur Aufnahme der Gliederkette 14 ausgebildet.

Jeder Kanal 10 enthält zwei rechteckige Druckplatten 18, die mit seitlich abstehenden waagerechten Zapfen 19 an den Gliederketten 14 befestigt sind, und zwar sind die oberen Zapfen 19 an der oberen Gliederkette 14 befestigt, während die unteren Zapfen 19 an der unterhalb der oberen Gliederkette 14 befestigten unteren Gliederkette 14 befestigt sind. Diese Anordnung ermöglicht ein Verschieben der Druckkplatten 18, ein dadurch bedingtes Umlaufen der beiden Gliederketten 14 und ein Antreiben des Zahnrades 13 der Hauptwelle 11 durch die treibenden Zahnräder 15 der Gliederketten. Die so angetriebene Hauptwelle 11 kann dann beispielsweise einen Generator für elektrischen Strom antreiben.

Die beiden Druckplatten 18 jedes Kanals 10 sind so angeordnet, daß immer jeweils eine Druckplatte 18 sich im unteren Bereich und eine Druckplatte sich im oberen Bereich des Kanals 10 befindet. Die untere Druckplatte 18 taucht in die strömende Flüssigkeit ein und wird von dieser verscho-ben, bis sie ihre Endstellung im Bereich der Hauptwelle erreicht hat. Dort taucht sie aus der strömenden Flüssigkeit auf und bewegt sich in die obere Ebene. Während dieses Vorganges hat sich die andere Druckplatte 18 aus der oberen Ebene in die untere Ebene bewegt und wird nun von der strömenden Flüssigkeit weiterbewegt.

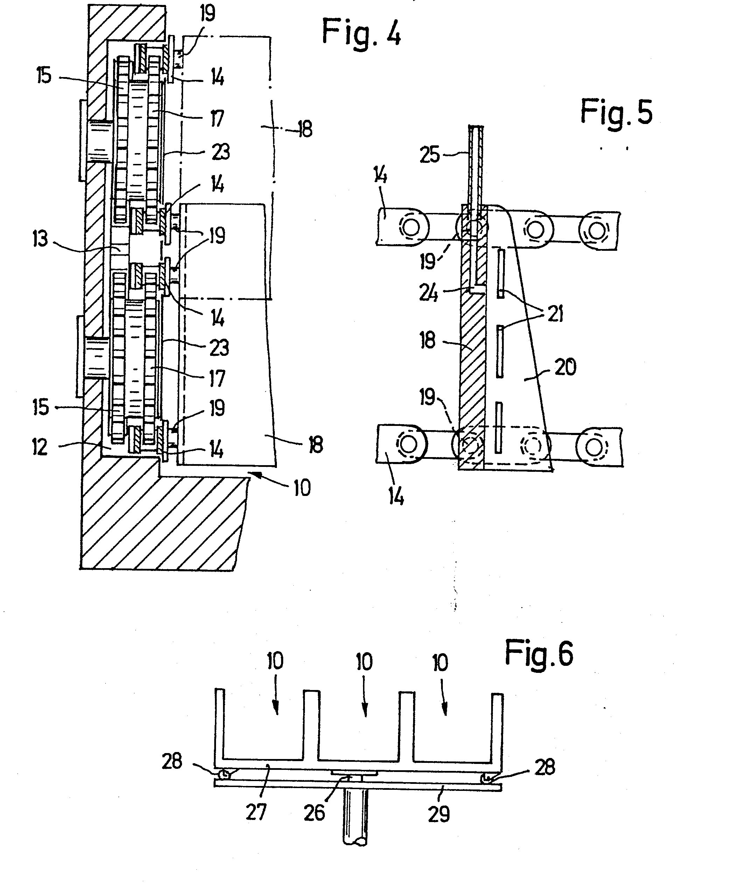

An den beiden Seiten jeder Druckplatte 18 sind zwei in Strömungsrichtung weisende senkrechte Leitbleche 20 angeordnet, in denen senkrecht verlaufende geradlinige Längsschlitze 21 eingearbeitet sind. Diese Längsschlitze können durch Ausbiegen von Nasen 22 entstehen, wobei die Nasen 22 sich an den Außenseiten der Leitbleche 20 in Bezug auf die Druckplatte 18 befinden, also in dem Zwischenraum zwischen den Leitblechen 20 und den Seitenwänden jedes Kanals. An den Seitenwänden sind dabei die Ausnehmungen 12 durch Blenden 23 verdeckt. Die Druckplatten 18 können mit senkrechten Entlüftungskanälen 24 versehen sein, an deren oberen Enden von der Oberkante aufragende Entlüftungsrohre 25 anbringbar sind. Durch diese Rohre 25 und Kanäle 24 kann Luft in den von den Leitblechen 20 seitlich abgeschlossenen und von dem über die Oberkante der Druckplatte 18 übertretenden Flüssigkeitsstrom abgeschlossenen Raum vor der Druckplatte 18 einströmen, deren Menge von einem Differenzdruck-Überströmventil gesteuert wird. Die Anordnung der Kanäle 10 gemäß Fig.6 der Zeichnung für die Ausnutzung von Windkraft ist mit Hilfe einer drehbaren Achse 26 durchgeführt, die senkrecht gelagert ist und an deren oberem Ende die Böden der Kanäle 10 in Form einer gemeinsamen Drehscheibe 27 ausgebildet sind. Über Rollen 28 stützt sich die Drehscheibe 27 auf einer festen waagerechten Stützplatte 29 ab.

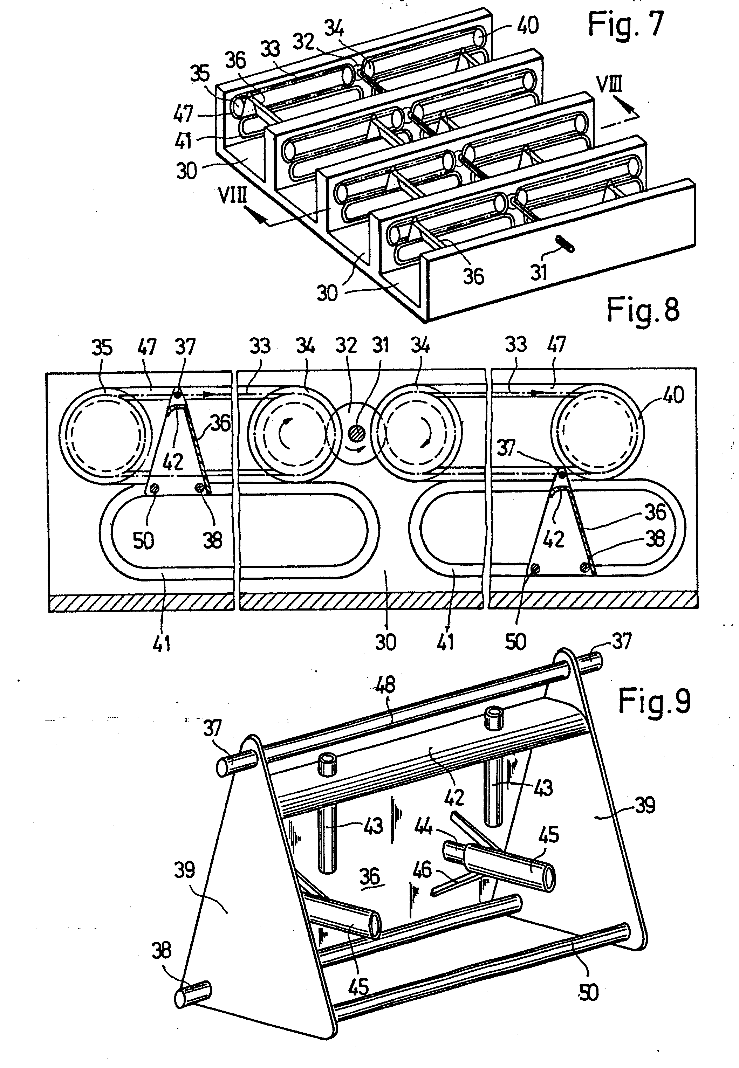

Bei dem weiteren Ausführungsbeispiel der Erfindung gemäß
Fig.7 bis 13 der Zeichnung werden die strömenden Wassermengen so gestaut, daß infolge des Staudrucks die Druckplatten verschoben wird, die wiederum über Gliederketten
und treibende Zahnräder eine Hauptwelle antreibt. Die
Kraftanlage eignet sich insbesondere für den Einsatz in
Flüssen und Gezeitenzonen an den Küsten.

Im folgenden wird ein Kanal mit zwei Druckflächen beschrieben, die sich jeweils in einer Kanalhäflte befinden.
Die Druckfläche jeder Kanalhälfte erstreckt sich in Querrichtung der Strömung jeweils über die gesamte Kanalbreite.
Diese rechteckige Druckfläche ist in dem Kanal in Strömungsrichtung geradlinig verschiebbar angeordnet, so daß
die konventionell erforderliche energiehemmende Richtungsänderung der Strömungsmassen vermieden wird. Die Druckfläche besteht aus einem rechteckig geformten Stahlprofilrahmen, dessen seitliche Bleche zwei spitzwinklige Dreiecke bilden. Sie ist seitlich und zur Druckseite hin mit
profilierten Stahlblechen verkleidet. Aus der Natur des
aufrechtstehenden Dreiecks heraus lehnt sich somit die
eigentliche Druckfläche geneigt zur druckabgewandten Seite
hin. Der Neigungswinkel kann etwa 23 bis 24° betragen.
Die Druckfläche ist an ihren beiden Seiten über die dreieckigen Seitenbleche und deren von Dreieck zu Dreieck
führenden inneren Streben oberhalb der Wasseroberfläche
mit zwei seitlichen Gliederketten verbunden. Dazu dienen
von den Seitenblechen an deren Außenseiten rechtwinklig
abstehende obere Zapfen, die Teile der Gliederketten sind.
An den unteren Enden der Seitenbleche befinden sich zur
Druckseite hin nach außen abstehende untere Zapfen, die
auf Rollen gelagert und mit diesen in Führungsnuten geführt sind, die sich in den Seitenwänden des Kanals befinden. Die Führungsnuten sind so ausgebildet, daß sie dem Verlauf der Gliederketten entsprechen, so daß im betrieblichen Zustand die Bewegungen der oberen und unteren Zapfen koordiniert sind. Die Druckfläche wird als an ihrem unteren Ende von den Gliederketten gehalten.

Der Kanal, durch den die Strömungsmengen des strömenden Mediums, also des Wassers, gleitet werden, nimmt alle beweglichen und unbeweglichen Teile der Kraftanlage auf. Vorzugsweise werden mehrere gleichartige parallel angeordnete Kanäle mit jeweils rechteckigem Querschnitt zu einer Anlage zusammengefügt. Jeder Kanal hat zwei Längshälften und nimmt in der Mitte oberhalb der Wasseroberfläche die Hauptwelle auf. Diese läuft zu der Längsrichtung der Kanäle, also zu der Strömungsrichtung, rechtwinklig und liegt in den Kanälen mit allen Umlaufrädern auf gleicher Ebene. In jedem Kanal sind an den Innenseiten oberhalb der Wasseroberfläche je vier Umlenkräder an beiden Seiten angeordnet, wobei jeweils zwei Umlenkräder in der Mitte des Kanals mit dem Antriebszahnrad der Hauptwelle verzahnt sind. Über die einzelnen Umlaufräderpaare sind endlose Gliederketten gespannt. Die Gliederketten, von denen jede Druckplatte über die beiden seitlich abstehenden oberen waagerechten Zapfen geführt ist, befinden sich an bzw. in den beiden Seitenwänden des Kanals und verlaufen mit ihrer Bewegungsrichtung in Strömungsrichtung bzw. entgegen der Strömungsrichtung. Bei der Anordnung innerhalb der Seitenwände können nischenförmige Umlaufführungen mit U-Profil vorgesehen werden, die zur Kanalinnenseite offen sind. Die obere und untere Begrenzung der nischenförmigen Ausnehmungen entsprechen der Höhe der Gliederkette zuzüglich der erforderlichen Toleranz.

Außer den oberen Umlaufführungen befinden sich in jeder Kanalhälfte an beiden Seitenwänden die unteren Führungsnuten. Jeder oberen Umlaufführung entspricht eine untere Führungsnut. Die beidseitigen unteren Führungsnuten in der rechten Kanalhälfte beginnen unterhalb der mit der Hauptwelle verzahnten Umlaufräder, führen im Halbkreis nach unten in die Nähe des Kanalbodens, folgen diesem parallellaufend und enden mit einem Halbkreis rechts seitlich unterhalb des Umlenkrades am Anfang der vorderen Kanalhälfte. In der linken Kanalhälfte verlaufen die unteren Führungsnuten höhen- und längenmäßig kongruent. Die oberen Teile der unteren Führungsnuten befinden sich jeweils oberhalb der Wasseroberfläche und nehmen die Rollen der beidseitigen Druckflächenzapfen auf.

Die beidseitigen oberen Umlaufführungen in der rechten Kanalhälfte beginnen mit einer kreisförmigen Erhöhung unterhalb der mit der Hauptwelle verzahnten Umlenkräder, führen oberhalb der Umlenkräder waagerecht der Strömungsrichtung entgegen zu den Umlenkrädern in der vorderen Kanalhälfte, folgen den Umlenkrädern im Halbkreis nach unten und verlaufen weiter waagerecht zum Ausgangspunkt. In der linken Kanalhälfte verlaufen die Umlaufführungen höhen- und längenmäßig ebenfalls kongruent und nehmen die endlosen Gliederketten auf, an denen die beidseitigen Druckflächen mit den oberen Enden befestigt sind.

Die sichtbaren Vorderseiten aller Umlenkräder sind mit den Kanalinnenseiten eben. Alle Umlenkräder in der unmittelbaren Umgebung der Hauptwelle haben zur Wandseite hin Zahnräder. Diese sind paarweise auf gleicher Höhe und gegenüberliegend mit dem jeweiligen Antriebsrad der Hauptwelle verzahnt. Die Hauptwelle führt in der Querschnittsebene durch die Mitte aller Kanäle und nimmt die gesamte
von den Strömungsmassen an die Druckflächen gegebene Energie auf. Die Hauptwelle und die Achsen aller Umlenk- und
Antriebsräder liegen auf gleicher Höhe.

Der Vorgang des Eintauchens, Verschobenwerdens und Auftauchens der Druckplatten findet während des Betriebes
in allen Kanälen abwechselnd statt, jedoch nach bestimmten Intervallen, so daß gewisse jeweilige ganz kurz auftretende Nullenergie-Stellungen beim Aus- bzw. Eintauchen
zweier Druckplatten von den anderen überbrückt werden,
die sich im eingetauchten Zustand in den Nachbarkanälen
befinden.

Das Ein- bzw. Auftauchen der Druckplatten nach bestimmten
betriebsbedingten Intervallen geschieht, damit eine fortdauernde, sich selbst unterhaltende und ausgeglichene
Rotation der Hauptwelle gewährleistet ist. Das ist die
Voraussetzu-ng für eine gleichbleibende Energieabgabe
seitens der Hauptwelle über ein Schaltgetriebe an ein
Aggregat. Mit der Schaltung des Getriebes hat man die
Möglichkeit, die Geschwindigkeiten der Strömungsmengen
in dem Verbund mit den Druckplatten zu reduzieren, um
den Wasserspiegel zu erhöhen, so daß ein Stau entsteht.
Bei witterungsbedingtem Anfall großer Strömungsmengen
wird man diese durch entsprechende Stufenschaltungen so
regulieren, daß die gewünschte Höhe des Wasserspiegels
erhalten bleibt. Auch besteht die Möglichkeit, die gesamte Druckflächen-Transmissions-Kraftanlage als sogenannten Ponton zu bauen, damit sie sich schwimmfähig dem
jeweiligen Wasserspiegel anpaßt. Eine solche Anlage müßte
dann an langen Trossen, die diagonal gespreizt in Flußrichtung verlaufen, befestigt und gegen Verkantung abgesichert werden. Anlagen solcher Art könnten ortsungebunden gebaut und zum Einsatzort eingeschwommen werden.

Die Druckplattenhöhe und die Durchmesser der Umlenkräder sollten doppelt so groß sein wie die normale Tiefe der Strömungs-Wassermassen, um den Stau zu ermöglichen. Der Höhenunterschied zwischen dem Wasserspiegel vor der Druckplatte und hinter derselben entspricht dem Strömungsdruck. Während des Betriebes halten die Druckplatten in allen Kanälen die gesamten Strömungsmengen in jeder Zeit unter Kontrolle. Will man jedoch einen bestimmten ungehinderten Freifluß erreichen, so muß man unterhalb aller Druckplatten in allen Kanälen einen Freiraum belassen. Ein seitlich angelegter, mit einem Schieber versehener Stichkanal würde ebenfalls eine bestimmte gewünschte Menge der strömenden Flüssigkeit kontrolliert ablaufen lassen.

Im unteren Viertel der Druckplatte können aus zwei Rohrstutzen bestehende Saugvorrichtungen angeordnet sein. Durch dieselben pressen sich Teile der Strömungsmengen hindurch, sie weisen düsenförmige Einschnürungen auf, so daß in dem Raum hinter der Druckplatte ein statischer Unterdruck auftritt, weil die überfließenden und beidseitig vorbeifließenden Wasserströmungsmassen den Raum hinter der Druckplatte vom normalen statischen Luftdruck abschirmen. Durch dieses abgeschirmte Luftkissen mit statischem Unterdruck gegenüber dem normalen statischen Druck in der äußeren Umgebung des Luftkissens wird der atmosphärische Widerstandsdruck hinter der Druckplatte veringert und die Schubkräfte der Strömungsmassen werden proportional erhöht. Die Funktion der Saugvorrichtungen ist allgemein bekannt, so daß ein erfindungsmäßiger Anspruch hierauf nicht gestellt wird. Um jedoch einen kontrollierten Unterdruck zu erreichen, müßten stellbare Ausgleichsventile an den Druckplatten angeordnet werden. Die Oberteile der Seitenbleche der Druckplatten sind mit den umlaufenden endlosen Gliederketten verbunden. Vorteilhaft würden dabei evtl. einzubauende größere Kettenzylinder das Eigengewicht der Ketten und Druckplatten wegen der geringeren Reibung übernehmen. Dieses wirkt sich besonders bei langen Laufstrecken aus, die zwischen den Ein- bzw. Auftauchpunkten der einzelnen Druckplatten im betrieblichen Zustand entstehen. Die oberen Nischenumlaufführungen für die Gliederketten und die unteren Führungsnuten für die Zapfen bzw. Rollen sind in allen Kanälen kongruent, nur sind die letzteren nach vorn betriebsbedingt versetzt. Die Gliederketten können zur Kanalinnenseite hin mit Blenden versehen werden, die das Eindringen von Fremdkörpern aus der Atmosphäre verhindern. Da der Bereich der Gliederketten vollkommen oberhalb der Wasserfläche ist, kommen ohnehin geringe Fremdkörper aus den Strömungsmengen an die Gliederketten.

Während die Druckplatten über die Oberseiten der Seitenbleche die Gliederketten im betrieblichen Zustand stromabwärts drücken und somit über die Umlenkräder der Hauptwelle Energie liefern, übernehmen die seitlichen unteren Zapfen mit ihren in den Führungsnuten gelagerten Rollen die Umlaufführungen im unteren Bereich der Druck-platten.

Hier wäre nochmals zu erwähnen, daß die Längen der zwei seitlichen Bleche der Druckplatten länger sind, als die senkrechte Mittellinie der dreieckigen Seitbleche. Hierdurch lehnen sich die Druckflächen oben zur druckabgewandten Seite hin um ca. 23 bis 24° in eine Neigung.

Sie sind somit auf ihren waagerechten Wegstrecken einmal
oben an den Kettengliedern verbunden und zum anderen unten auf Rollen gelagert, die niemals durch den Druck der
Strömungsmengen den senkrechten Punkt unterhalb der Gliederkettenverbindungen erreichen. Dieses ist die Voraussetzung dafür, daß die Druckplatten im Zusammenwirken
mit den Nischenführungen und den Gliederketten im betrieblichen Zustand den Wasserdruck zurückweichen aufnehmen, wobei sich der Strömungsdruck über die Druckplatten
unten auf die Rollen und oben auf die Gliederketten verlagert. Hierbei bleibt die in Flußrichtung geneigte Stellung der Druckplatte funktionsgerecht erhalten. Da Fremdkörper in den Strömungsmengen mitgeführt werden können,
obwohl eine grobere Filterung vorgenommen werden soll,
empfiehlt es sich, vor den Rollen sogenannte Hartgummischalen o.ä. zu montieren, die kleinere Sedimente zum
Kanalinneren schieben.

Dieses weitere Beispiel einer Kraftanlage zeigt vier parallele, oben offene Kanäle 30 mit gleichen rechteckigen
Querschnitten. In der Mitte aller Kanäle ist quer zur
Strömungsrichtung eine gemeinsame Hauptwelle 31 gelagert.
Jede Seitenwand eines Kanals 30 enthält an der

Innenseite eine Ausnehmung, in der sich ein mit der Hauptwelle fest verbundenes angetriebenes Zahnrad 32 befindet.
In der Ausnehmung einer Kanalseite ist auf jeder Kanalhälfte eine endlose Gliederkette 33 angeordnet, welche
auf ein mit dem angetriebenen Zahnrad 32 der Hauptwelle
31 im Eingriff befindliches treibendes Zahnrad 34 und
auf ein am Ende des Kanals 30 gelagertes Umlenkrad 35
gespannt ist.

Jeder Kanal 30 enthält zwei rechteckige Druckplatten 36,
die mit seitlich abstehenden waagerechten oberen Zapfen
37 und unteren Zapfen 38 geführt ist. Die oberen Zapfen
37 ragen waagerecht und rechtwinklig von Seitenblechen
39 an der Außenseite ab, die die Druckplatte 36 seitlich
begrenzen. Sie sind Teile der endlosen Gliederkette 33,
die an den Seitenwänden auf die als Umlenkräder wirkenden treibenden Zahnräder 34 und weitere Umlenkräder 35
bzw. 40 gespannt sind. Dabei bewegen sich die Gliederketten 33 in waagerechter Richtung parallel zur Strömung,
wobei der untere Teil jeder Gliederkette sich in Strömungsrichtung und der obere Teil entgegen der Strömungsrichtung bewegt. Die in der ersten Kanalhälfte angeordneten Gliederketten 33 und die in der zweiten Kanalhälfte
angeordneten Gliederketten 33 befinden sich in derselben
Höhe, die waagerechten Achsen aller treibenden Zahnräder
34, Umlenkräder 40, angetriebenen Zahnräder 32 und der
Hauptwelle 31 haben also denselben Abstand vom Boden des
jeweiligen Kanals 30.

In den unteren Bereichen jedes Kanals sind in den Seitenwä-nden Führungsnuten 41 angeordnet, wobei jede Führungsnut 41 der darüber befindlichen Führungsnut 47 der Gliederkette 33 entspricht. In den Führungsnuten 41 sind von den Seitenblechen 39 rechtwinklig abstehende untere Zapfen 38 über Rollen gelagert, so daß hier eine untere Führung der Druckplatten 36 während deren waagerechter Bewegung in Strömungsrichtung erfolgt. Die unteren Zapfen 38 befinden sich nicht senkrecht unter den oberen Zapfen 37, sondern in einer Ecke des Seitenblechs 39, so daß die gedachte Verbindungslinie zwischen dem unteren Zapfen 38 und dem oberen Zapfen 37 gegenüber der Senkrechten geneigt angeordnet ist. In entsprechender Weise ist auch die Druckplatte 36 geneigt.

An der Oberkante der Druckplatte 36 schließt sich eine waagerechte Wand 42 an, durch die im Ausführungsbeispiel zwei senkrechte Rohrstutzen 43 hindurchverlaufen, um den hinter der Druckplatte 36 befindlichen Raum zu ent- oder belüften. Die Druckplatte 36 selbst weist zwei Saugvorrichtungen auf, die jeweils aus zwei waagerechten Rohrstutzen 44 und 45 bestehen. Der Rohrstutzen 44 erstreckt sich an der Rückseite der Druckplatte 36 und endet in einer durchgehenden Bohrung der Druckplatte, so daß durch ihn die Vorderseite der Druckplatte und die Rückseite der Druckplatte miteinander verbunden sind. Über den Rohrstutzen 44 ist jeweils der waagerechte Rohrstutzen 45 mit größerem Durchmesser auf geringer Länge aufgesteckt und von Streben 46 an der Druckplatte 36 gehalten, so daß sich zwischen der äußeren Oberfläche des Rohrstutzens 44 und der inneren Oberfläche des Rohrstutzens 45 ein Ringraum ergibt, durch den beim Durchströmen von Strömungsmedium durch den Rohrstutzen 44 hindurch das an der Rückseite der Druckplatte 36 befindliche Medium angesaugt wird.

Die Rohrstutzen 44 sind an ihren innerhalb der Rohrstutzen 45 befindlichen Enden nach innen ringförmig umgebördelt, so daß sich hier eine Einschnürung befindet. Diese Einschnürungen verursachen beim Durchfluß der Strömungsmengen Wirbel, welche von den Hauptdurchflußmengen an die Innenwandungen der Rohrstutzen 45 geworfen werden und somit einen statischen Unterdruck (Zugkraft) hinter der Druckplatte erzeugen.

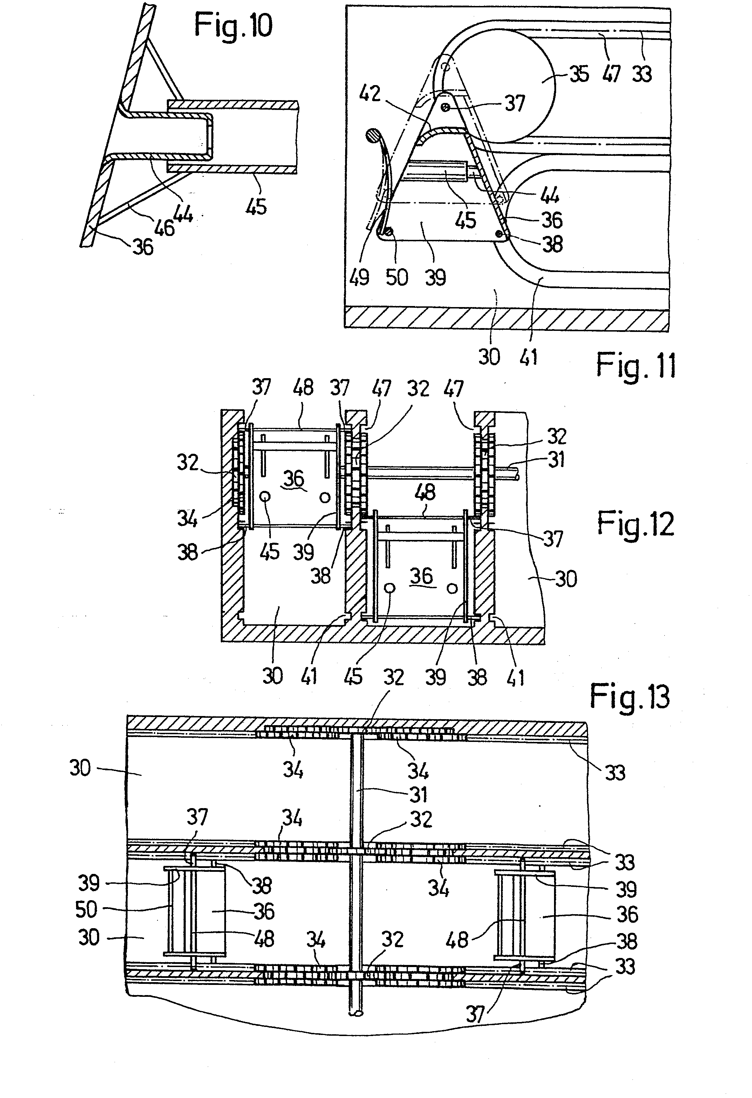

In Fig.12 der Zeichnung sind die oberen Führungsnuten 47 der Kanalwände erkennbar, in denen sich die Gliederketten 33 befinden. Die Zapfen 37 und 38 sind jeweils die Enden von durchgehenden waagerechten Querstreben 48, die zwischen den Seitenflächen 39 der Druckplatte 36 verlaufen.

Gemäß Fig.11 der Zeichnung kann in dem Kanal eine Blattfeder 49 am Ende der Bewegungsbahn der Druckplatte 36 angeordnet sein. Die infolge der Strömung verschobene, am Ende angekommene Druckplatte 36 drückt dann mit ihrer Querstrebe 50 die Blattfeder 49 ein, so daß Energie gespeichert wird, die die Blattfeder 49 dann wieder an die Druckplatte 36 abgibt, wenn die Druckplatte 36 nicht mehr von der Strömung beaufschlagt, also aus dem Strömungsmittel aufgetaucht ist. Nunmehr drückt also die Blattfeder 49 die Druckplatte 36 in ihre Rückwärtsbewegung hinein, so daß die Blattfeder 49 zur Überwindung des Totpunktes der Bewegungsbahn der Druckplatte 36 beiträgt. Die Blattfeder 49 trägt damit zur Vergleichmäßigung der Bewegungsabläufe bei.

Anstelle der dreieckförmigen Seitenbleche 39, die seitlich der Druckplatte 36 sich erstrecken, kann die Druckplatte 36 auch mit einer umlaufenden, rückseitig sich erstreckenden Wand (nicht dargestellt) versehen sein. Die Zapfen 37, 38, welche in die Führungen 41, 47 eingreifen, sind dabei jeweils in den Eckbereichen der seitlichen Wandung schräg zur Senkrechten geführt, während die Druckplatte 36 rechtwinklig in den Kanälen 30 geführt ist.

Herr Ferdinand Klute, Fixberg 6, 4790 Paderborn

Druckflächen-Transmissions-Kraftanlage

Patentansprüche

1. Druckflächen-Transmissions-Kraftanlage zur Nutzbarmachung der natürlichen Strömungsgefälle von Wasserund Windmengen, gekennzeichnet durch mehrere gleichartige, parallel angeordnete, nach oben offene Kanäle
(10, 30) mit jeweils rechteckigem Querschnitt, wobei
in jedem Kanal (10, 30) zwei mit einer Hauptwelle
(11, 31) verbundene, als Antriebe wirkende rechteckige, in Querschnittsebenen des Kanals (10, 30)
sich erstreckende Druckplatten (18, 38) in Strömungsrichtung geradlinig verschiebbar angeordnet sind.

2. Kraftanlage nach Anspruch 1, dadurch gekennzeichnet,
daß jede Druckplatte (18) über zwei seitlich abstehende obere waagerechte Zapfen (19) mit an den beiden Seitenwänden des Kanals (10) in Strömungsrichtung geführten endlosen oberen Gliederketten (14) und über zwei seitlich abstehende untere waagerechte Zapfen (19) mit an den beiden Seitenwänden des Kanals (10) unterhalb der oberen Gliederketten (14) in Strömungsrichtung geführten endlosen unteren Gliederketten (14) verbunden ist, wobei jede Gliederkette (14) auf zwei an den Seitenwänden gelagerte Umlenk-räder gespannt ist.

3. Kraftanlage nach Anspruch 1, dadurch gekennzeichnet, daß jede Druckplatte (36) zwischen zwei dreieckförmigen Seitenblechen (39) befestigt ist, wobei an jedem Seitenblech (39) an der Außenseite ein rechtwinklig abstehender, quer zur Strömungsrichtung sich erstreckender oberer Zapfen (37) und ein dazu paralleler unterer Zapfen (38) angeordnet ist, daß die oberen Zapfen (37) der Seitenbleche (39) mit in den beiden Seitenwänden des zugehörigen Kanals (30) in Strömungsrichtung geführten endlosen Gliederketten (33) verbunden sind, wobei jede Gliederkette (33) auf zwei in den Seitenwänden gelagerten Umlenkrädern (34, 40) aufgespannt ist, und daß in den Seitenwänden jedes Kanals (30) unterhalb jeder Gliederkette (33) eine der Kettenbahn entsprechende Führungsnut (41) angeordnet ist, in welcher der untere Zapfen (38) des benachbarten Seitenblechs (39) geführt ist.

4. Kraftanlage nach den Ansprüchen 1 bis 3, dadurch gekennzeichnet, daß die allen Kanälen (10, 30) gemeinsame Hauptwelle (11, 31) sich in der Mitte jedes Kanals (10, 30) quer zur Strömungsrichtung erstreckt, wobei an der Hauptwelle (11, 31) befestigte angetriebene Zahnräder (13, 32) sich mit als Umlenkräder der Gliederketten (14, 33) wirkenden treibenden Zahnrädern (15, 34) im Eingriff befinden, und daß die Verbindung zwischen jedem treibenden Zahnrad (15, 34) der Gliederkette (14, 33) und der Hauptwelle (11, 31) durch einen zusätzlichen Zahnkranz des treibenden Zahnrades (15, 34) hergestellt ist, der sich mit einem zugehörigen angetriebenen Zahnrad (13, 32) der Hauptwelle (11, 31) im Eingriff befindet.

5. Kraftanlage nach den Ansprüchen 1 bis 4, dadurch gekennzeichnet, daß die Verbindungslinien der Achsen bzw. Mittelpunkte einander entsprechender treibender Zahnräder (15, 34) und entsprechender Umlenkräder (16, 35, 40) der Gliederketten (14, 33) beider Seiten jedes Kanals (10, 30) parallel zum Kanalboden verlaufen.

6. Kraftanlage nach den Ansprüchen 1 bis 5, dadurch gekennzeichnet, daß der die Laufstrecke der Druckplatte (18, 36) bestimmende Abstand des Umlenkrades (16, 35, 40) von dem treibenden Zahnrad (15, 34) einer Gliederkette (14, 33) in allen Kanälen (10, 30) gleich ist.

7. Kraftanlage nach den Ansprüchen 1 bis 6, dadurch gekennzeichnet, daß alle Kanalhälften in den seitlichen Wänden oben und unten in sich geschlossene Führungsnuten (47, 41) aufweisen, die höhen- und längenmäßig gleich ausgebildet und gegeneinander zur Strömungsseite versetzt angeordnet sind, und daß die Verbindungslinien der Mittelpunkte einander entsprechender treibender Zahnräder (34) und einander entsprechender Umlenkräder (35, 40) der Gliederketten (33) beider Seiten jedes Kanals (30) mit der Achse der Hauptwelle (31) auf einer Höhe liegen.

8. Kraftanlage nach den Ansprüchen 1 bis 7, dadurch gekennzeichnet, daß von den beiden Druckplatten (18, 36) eines Kanals (10, 30) sich eine in einer oberen Bewegungsebene außerhalb des strömenden Mediums befindet, während sich die andere in einer unteren Bewegungsebene innerhalb des strömenden Mediums befindet.

9. Kraftanlage nach den Ansprüchen 1 bis 8, dadurch gekennzeichnet, daß an jeder Druckplatte (18) zwei seitliche, in Strömungsrichtung weisende senkrechte Leitbleche (20) angeordnet sind, in denen sich mehrere senkrechte Längsschlitze (21) geradlinig hintereinander befinden, die zur Strömungsseite hin abgekantet (ausgestanzt, ausgebogen) sind, wobei die Begrenzungslinien der Leitbleche (20) an der Strömungsüberlaufseite der Druckplatte (18) der Strömungsverlaufsgrenze der überfließenden Menge angepaßt sind.

10. Kraftanlage nach den Ansprüchen 1 bis 9, dadurch gekennzeichnet, daß jede Druckplatte (36) im unteren Teil mindestens eine durchgehende Bohrung aufweist, an welcher sich an der von dem strömenden Medium abgewandten rückseitigen Oberfläche waagerechte Rohrstutzen (44, 45) einer Saugvorrichtung anschließen, und daß sich an der Oberkante der Druckplatte (36) eine zwischen den Seitenblechen (39) angeordnete waagerechte Wand (42) anschließt, wobei der unterhalb der Wand (42) befindliche und von der rückseitigen Oberfläche der Druckplatte (36) begrenzte Raum über als Ausgleichsventile wirkende senkrechte Rohrstutzen (43), die durch Bohrungen der Wand (42) hindurchverlaufen, mit der Außenseite verbunden ist.

1/4

0122428

Fig. 1

Fig. 2

Fig. 3

2/4

Fig. 4

Fig. 5

Fig.6

0122428

Fig. 7

Fig. 8

Fig. 9

**Fig.10**

**Fig. 11**

**Fig.12**

**Fig. 13**